(19) Europäisches Patentamt / European Patent Office / Office européen des brevets

(11) **EP 1 701 531 B1**

(12) **FASCICULE DE BREVET EUROPEEN**

(45) Date de publication et mention
de la délivrance du brevet:
**30.04.2008 Bulletin 2008/18**

(51) Int Cl.:
*H04M 19/00* *(2006.01)*    *H02J 7/34* *(2006.01)*

(21) Numéro de dépôt: **05300170.7**

(22) Date de dépôt: **08.03.2005**

(54) **Circuit de suppression de sous-tension transitoire**

Unterspannungsunterdrückungsschaltung

Voltage transient suppression circuit

(84) Etats contractants désignés:
**AT BE BG CH CY CZ DE DK EE ES FI FR GB GR HU IE IS IT LI LT LU MC NL PL PT RO SE SI SK TR**

(43) Date de publication de la demande:
**13.09.2006 Bulletin 2006/37**

(73) Titulaire: **Alcatel Lucent**
**75008 Paris (FR)**

(72) Inventeurs:
• **Péron, Daniel**
**22300, Lannion (FR)**
• **Lucas, Gilbert**
**22300, Lannion (FR)**

(74) Mandataire: **Chaffraix, Sylvain**
**Alcatel Lucent**
**Intellectual Property & Standards**
**54 rue La Boétie**
**75008 Paris (FR)**

(56) Documents cités:
**EP-A- 0 626 744**    **US-A- 5 945 816**
**US-A- 5 973 547**    **US-A1- 2004 135 622**

**Description**

L'invention concerne un dispositif de protection permettant à une charge de supporter une défaillance transitoire d'alimentation. Un tel dispositif est utilisable notamment dans un équipement de commutation pour les télécommunications, qui nécessite une tension d'alimentation toujours supérieure à une valeur minimale fixée. Un tel équipement de télécommunication est constitués de cartes électroniques insérées dans les connecteurs d'un fond de panier, ce fond de panier assurant l'alimentation électrique d'une pluralité de cartes, avec une tension continue de 48V généralement.

Toutes ces cartes sont reliées en parallèle pour leur alimentation. Si un court-circuit se produit sur une carte, et s'il court-circuite l'entrée d'alimentation de la carte, il fait fondre un fusible propre à cette carte. Grâce à la fusion du fusible, cette carte est déconnectée de la source d'alimentation après un délai de l'ordre de quelques millisecondes. Pendant ce délai, la tension de la source d'alimentation peut être pratiquement nulle à cause du court-circuit. Les cartes étant toutes alimentées en parallèle, elles ne peuvent pas fonctionner correctement pendant ce délai, si elle ne sont pas protégées contre un telle défaillance transitoire d'alimentation.

Ces cartes comportent généralement plusieurs condensateurs de filtrage reliés en parallèle sur l'entrée d'alimentation de la carte, et un convertisseur continu-continu, convertissant la tension de 48V en une ou plusieurs tensions continues plus basses, 5V et 3,3V par exemple. Ce convertisseur ne peut fonctionner correctement que dans une plage de tension d'entrée bien définie, par exemple 36V à 72V.

Les entrées d'alimentation de chaque carte sont reliées à la source d'alimentation (ou aux sources d'alimentation) par un système de commutation constitué généralement de diodes, de telle façon que ces condensateurs de filtrage puissent se charger quand la source d'alimentation fonctionne normalement, et ne puissent pas se décharger quand la source d'alimentation est court-ciruitée. Pour pallier à une défaillance de la source d'alimentation, elle est constituée généralement de deux sources reliées en parallèle par des diodes.

Pour éviter que la tension à l'entrée du convertisseur ne descende en dessous de la valeur minimale permise, pendant une défaillance transitoire de la tension d'alimentation, il est connu d'augmenter la capacité des condensateurs de filtrage afin qu'ils stockent suffisamment de charge pour que la tension d'entrée du convertisseur reste au-dessus de la valeur minimale pendant toute la durée de la défaillance.

Les condensateurs de filtrage placés en parallèle sur l'entrée d'alimentation de chaque carte ont une capacité totale très élevée, par exemple 10.000 microfarads pour un carte consommant 200W. Le volume occupé par ces condensateurs est alors très important et ces condensateurs augmentent notablement le coût de la carte.

Le document US 5.973.547 décrit un dispositif de régulation de tension comportant des entrées connectées à une source d'alimentation électrique, des sorties connectées à une charge, deux condensateurs de stockage, des moyens de commutation, et des moyens de commande des moyens de commutation. Ces deux condensateurs de stockage sont :

- reliées en parallèle à au moins une source d'alimentation quand au moins une source d'alimentation fonctionne normalement ;
- isolées de toute source d'alimentation et sont reliées en série sur les sorties du dispositif quand aucune source d'alimentation ne fonctionne normalement.

Ce dispositif protège la charge contre une baisse de tension parce que la mise en série des deux condensateurs de stockage crée momentanément une source de tension dont la tension initiale est théoriquement égale à la somme des tensions de charge de ces deux condensateurs.

L'objet de l'invention est une amélioration de ce dispositif connu.

Selon l'invention, un dispositif de protection permettant à une charge de supporter une défaillance transitoire d'alimentation, ce dispositif comportant :

- des entrées connectées à au moins une source d'alimentation électrique, et des sorties connectées à cette charge ;
- au moins deux condensateurs de stockage, des premiers moyens de commutation et des moyens de commande des premiers moyens de commutation, tels que ces deux condensateurs de stockage sont :

- reliées en parallèle à au moins une source d'alimentation quand au moins une source d'alimentation fonctionne normalement ;
- isolées de toute source d'alimentation et sont reliées en série sur les sorties du dispositif quand aucune source d'alimentation ne fonctionne normalement ;

est caractérisé en ce que :

- un premier condensateur de stockage a une première borne reliée à une sortie positive du dispositif, et une seconde borne reliée à la sortie négative du dispositif par une première résistance ;
- un second condensateur de stockage a une première borne reliée à la sortie négative du dispositif, et une seconde borne reliée à la sortie positive du dispositif par une seconde résistance ;
- un commutateur électronique relie la seconde borne du premier condensateur à la seconde borne du second condensateur de stockage ;

et en ce que les premiers moyens de commande comportent des moyens pour commander le commutateurs de façon que : lorsqu'aucune source d'alimentation ne fonctionne normalement, le commutateur se ferme ; et que, lorsqu'au moins une source d'alimentation fonctionne normalement, le commutateur s'ouvre.

Le dispositif ainsi caractérisé présente l'avantage de comporter seulement un commutateur électronique, au lieu de trois dans le dispositif connu par le document US 5.973.547, tout en conservant la même faculté de protection contre les baisses de tension.

L'invention sera mieux comprise et d'autres caractéristiques apparaîtront à l'aide de la description ci-dessous et des figures l'accompagnant :

- La figure 1 représente le schéma synoptique d'un exemple de réalisation du dispositif de protection connu, dans l'état où il est lorsque la source d'alimentation a un fonctionnement normal.
- La figure 2 représente le schéma synoptique de cet exemple de réalisation du dispositif connu, dans l'état où il est lorsque la source d'alimentation a une défaillance.
- La figure 3 représente le schéma synoptique d'une variante de cet exemple de réalisation du dispositif connu, comportant une unité de commande réalisée différemment.
- La figure 4 représente le schéma synoptique d'un exemple de réalisation du dispositif de protection selon l'invention, dans l'état où il est lorsque la source d'alimentation a un fonctionnement normal.
- La figure 5 représente le schéma synoptique de cet exemple de réalisation du dispositif de protection selon l'invention, dans l'état où il est lorsque la source d'alimentation a une défaillance.
- La figure 6 représente le schéma synoptique d'une variante de cet exemple de réalisation du dispositif de protection selon l'invention.

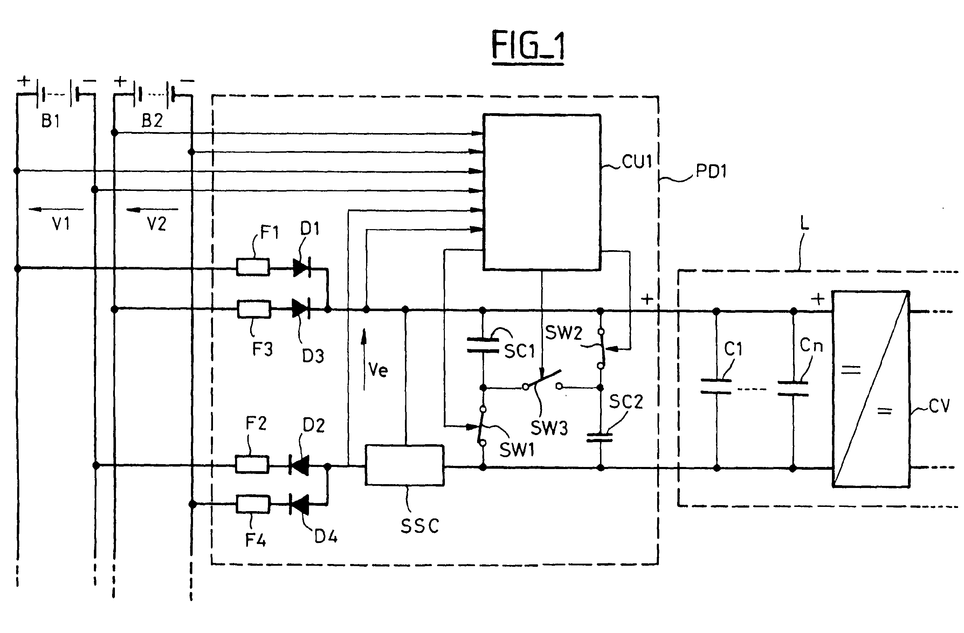

Un exemple de réalisation PD1 du dispositif connu est représenté sur la **figure 1.** Il comporte :

- deux entrées positives reliées respectivement aux bornes positives de deux sources d'alimentation B1 et B2 ;
- deux entrées négatives reliées respectivement aux bornes négatives des deux sources d'alimentation B1 et B2 ;
- deux diodes D1 et D3 dont les anodes sont reliées respectivement aux deux entrées positives, respectivement via un fusible F1 et un fusible F3 ;
- deux diodes D2 et D4 dont les cathodes sont reliées respectivement aux deux entrées négatives, respectivement via un fusible F2 et un fusible F4 ;
- une sortie positive et une sortie négative reliées respectivement à une entrée positive et à une entrée négative d'une charge L, la sortie positive étant reliée aux cathodes des diodes D1 et D3 ;
- un circuit de démarrage lent SSC ayant trois accès reliés respectivement à la sortie positive du dispositif PD1, à la sortie négative du dispositif PD1, et aux anodes des diodes D2 et D4 ;

- un condensateur de stockage SC1 ayant une première borne reliée à la sortie positive du dispositif PD1, et une seconde borne reliée à la sortie négative du dispositif PD1 par un commutateur électronique SW1 ;
- un condensateur de stockage SC2 ayant une première borne reliée à la sortie négative du dispositif PD1 et une seconde borne reliée à la sortie positive du dispositif PD1 par un commutateur électronique SW2 ;
- un troisième commutateur électronique SW3 reliant la seconde borne du condensateur SC1 à la seconde borne du condensateur de stockage SC2 ;
- une unité de commande CU 1 ayant :

  -- des sorties reliées respectivement à des entrées de commande des commutateurs électroniques SW1, SW2, SW3 ;
  -- et deux paires d'entrées reliées respectivement aux bornes de la source B1 et aux bornes de la source B2,
  -- et une troisième paire d'entrées reliées aux cathodes des diodes D1 et D3 d'une part, et aux anodes des diodes D2 et D4 d'autre part.

La charge L est par exemple une carte électronique comportant une série de condensateurs de filtrage C1, ... , Cn et un convertisseur continu/continu CV reliés tous en parallèle sur les deux entrées de la charge L.

Le circuit de démarrage lent SSC est un circuit électronique classique qui a pour fonction de limiter la sur-intensité provoquée par la charge des condensateurs situés en aval, notamment SC1, SC2, C1, ..., Cn, lors de l'insertion de la carte dans un fond de panier, ou lors de la mise sous tension du fond de panier.

Les sources B1 et B2 sont constituée respectivement de deux batteries de 48V rechargées en permanence par des chargeurs (non représentés) alimentés par le secteur. Elles alimentent en parallèle plusieurs charges telle que la charge L seule représentée. Chaque charge qui nécessite une protection contre une défaillance transitoire d'alimentation est reliée aux deux sources B1, B2 par un dispositif analogue au dispositif PD1. Les diodes D1, ...D4 permettent de secourir une première source, B1 par exemple, par l'autre source, B2, si une défaillance permanente affecte la première source elle-même. Par contre ces diodes ne peuvent pas empêcher une défaillance de la tension d'alimentation si un court-circuit affecte l'une des autres charges reliées en parallèle sur ces deux sources. En effet, un tel court-ciruit peut faire tomber la tension des deux sources B1 et B2 à la fois. C'est alors qu'intervient l'unité de commande CU qui mesure en permanence :

- la tension V1 aux bornes de la source B1,
- la tension V2 aux bornes de la source B2,

- la tension Ve sur les entrées du dispositif PD1 juste en aval des diodes D1, ..., D4, et des fusibles F1, ..., F4.

La figure 1 représente l'état où sont ces commutateurs lorsque chaque source d'alimentation B1, 82 a un fonctionnement normal. L'unité de commande CU1 détecte que Ve a une valeur (47V environ) inférieure à V1 et V2 (48V environ), c'est à dire que les diodes D1 à D4 sont passantes. Elle commande les commutateurs SW1 et SW2 pour qu'ils soient fermés et SW3 pour qu'il soit ouvert, afin que les condensateurs SC1 et SC2 soient reliées tous les deux en parallèle sur les sorties du dispositif PD1. Les condensateurs SC1 et SC2 se chargent à la tension fournie par les sources B1 et B2, à travers les diodes D1, ..., D4, soit environ 47V. Pendant ce fonctionnement normal, Ils ajoutent un certain effet de filtrage à celui des condensateurs C1, ..., Cn.

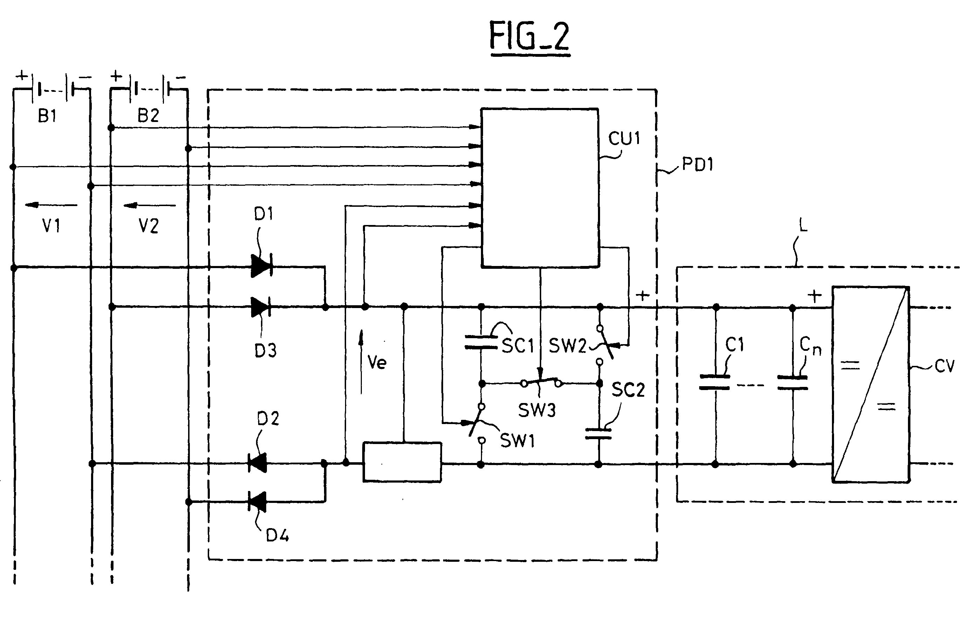

La **figure 2** représente le schéma de ce même exemple de réalisation du dispositif connu, en montrant l'état des commutateurs SW1, SW2, SW3 lorsque chaque source d'alimentation B1, B2 a une défaillance transitoire due à un court-ciruit sur une des charges autres que L. Dans le dispositif de protection PD1, les tensions V1 et V2 devenant subitement inférieures à la tension Ve, les diodes D1, D2, D3, D4 se bloquent et isolent le dispositif PD1 des sources B1 et B2 qui sont court-circuitées. Elles empêchent que le court-circuit décharge les condensateurs SC 1 et SC2. La tension aux bornes des condensateurs SC1, SC2, C1, ..., Cn se met à baisser progressivement car ils se déchargent en alimentant le convertisseur CV.

Lorsque la tension Ve (environ 47V) devient supérieure à V1 la paire de diode D1-D2 se bloque. Lorsque la tension Ve devient supérieure à V2 la paire de diode D3-D4 se bloque. Lorsque Ve devient supérieure à V1 et à V2 l'unité de commande CU1 en conclut qu'il y a une défaillance des sources B1 et B2 ; et elle commande alors les commutateurs SW1 et SW3 pour qu'ils soient ouverts. Après un délai nécessaire à cette ouverture (10 microsecondes par exemple), elle commande la fermeture du commutateur SW2, afin que les condensateurs SC1 et SC2 soient reliées en série. Cet ensemble est alors en parallèle sur les sorties du dispositif PD1, et fournit théoriquement (s'il n'y avait pas les condensateurs de filtrage C1, ..., Cn) une tension égale à la somme de la tension de charge du condensateur C1 et de la tension de charge du condensateur C2, au moment de la commutation, soit environ 94V. Cette tension est en réalité atténuée par les condensateurs de filtrage C1,..., Cn. L'apport de charge à ces condensateurs C1, ..., Cn, procure une tension initiale de 82V dans un exemple de réalisation. Cette tension décroît ensuite, mais elle permet de fournir à la la charge L une tension supérieure à 36 V pendant un délai au moins égal à 5 ms (délai fixé par la norme ATCA, Advanced Telecommunication Computing Architecture), 36 V étant la valeur minimale nécessaire au bon fonctionnement du convertisseur CV dans cet exemple.

Les constantes de temps sont choisies telles que les trois transistors qui constituent les commutateurs SW1, SW2, SW3 ne peuvent pas être conducteurs simultanément.

Quand le court-circuit est terminé, l'unité de commande CU1 détecte que la tension Ve a une valeur (47V environ) redevenue supérieure à V1 et V2, pendant une durée supérieure à un seuil fixé (5 ms par exemple). Elle commande d'abord le commutateur SW3 pour qu'il soit ouvert. Après un délai nécessaire à cette ouverture (100 microsecondes par exemple), elle commande les commutateurs SW1 et SW2 pour qu'ils soient fermés, afin que les condensateurs SC 1 et SC2 soient reliées tous les deux en parallèle sur les sorties du dispositif PD1. Ils se rechargent à la tension fournie par les sources B1 et B2, à travers les diodes D1, ..., D4, soit environ 47V.

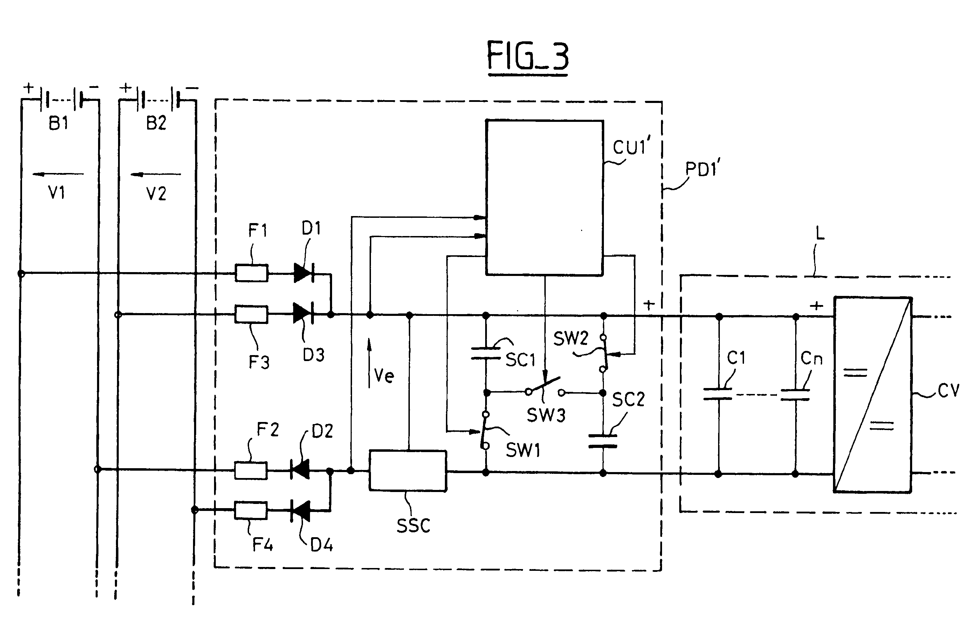

**La figure 3** représente le schéma synoptique d'une variante PD1' de ce cet exemple de réalisation du dispositif connu. L'unité de commande CU1 est remplacée par une unité de commande CU1' qui n'a qu'une seule paire d'entrées, reliée aux cathodes des diodes D1 et D3 d'une part, et aux anodes des diodes D2 et D4 d'autre part. Lorsque la tension Ve devient inférieure à une valeur de seuil fixée, 41V , l'unité de commande CU1' commande les commutateurs SW1 et SW3 pour qu'ils soient ouverts. Après un délai nécessaire à cette ouverture (10 microsecondes par exemple), elle commande la fermeture du commutateur SW2, afin que les condensateurs SC1 et SC2 soient reliées en série. Cet ensemble est alors en parallèle sur les sorties du dispositif PD1, et fournit une tension égale à la somme de la tension de charge du condensateur C1 et de la tension de charge du condensateur C2, au moment de la commutation, soit environ 82V initialement.

Quand le court-circuit est terminé, l'unité de commande CU1' détecte que la tension Ve a une voleur (47V environ) redevenue supérieure à la valeur de seuil, (41V) pendant une durée supérieure à un seuil fixé (5ms par exemple). Elle commande d'abord le commutateur SW3 pour qu'il soit ouvert. Après un délai nécessaire à cette ouverture (100 microsecondes par exemple), elle commande les commutateurs SW1 et SW2 pour qu'ils soient fermés, afin que les condensateurs SC1 et SC2 soient reliées tous les deux en parallèle sur les sorties du dispositif PD1. Ils se rechargent à la tension fournie par les sources B1 et B2, à travers les diodes D1 , ..., D4, soit environ 47V.

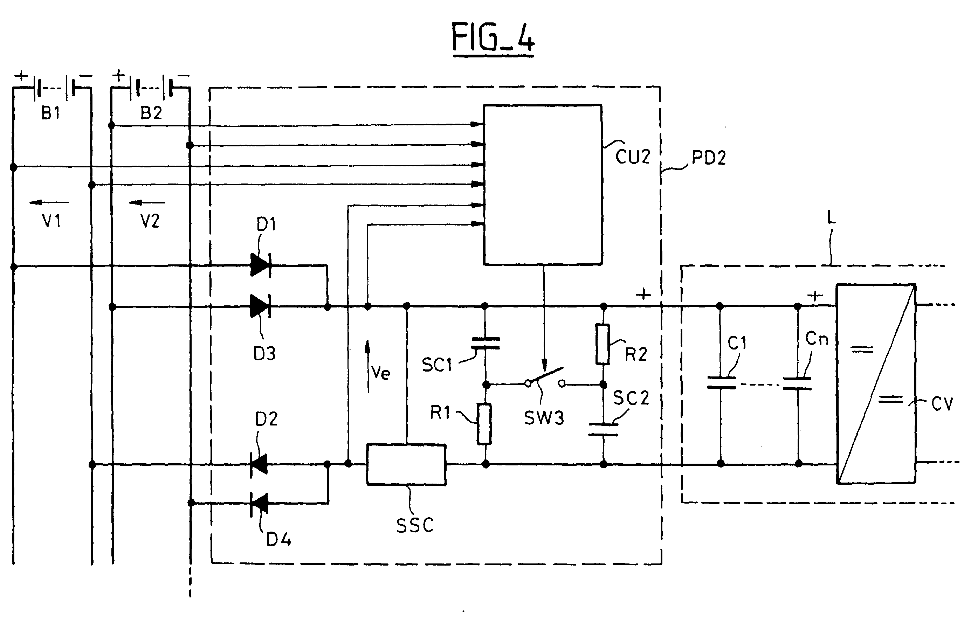

La **figure 4** représente le schéma synoptique d'un exemple de réalisation PD2 du dispositif de protection selon l'invention. Sa la réalisation est plus simple que celle du dispositif connu car il ne comporte qu'un seul commutateur électronique SW3. Il diffère du dispositif connu par le fait que les commutateurs électroniques SW1 et SW2 sont remplacés respectivement par des résistances R1 et R2. L'unité de commande CU2 est analogue à l'unité de commande CU1 de l'exemple de réalisation PD1, par exemple, mais a une seule sortie qui commande le commutateur SW3.

Cette figure 4 représente l'état où est le commutateurs SW3 lorsque chaque source d'alimentation B1, B2 a un fonctionnement normal. L'unité de commande CU2 détecte que la tension Ve a une valeur (47V environ) inférieure à V1 et V2 (48V environ), c'est à dire que les diodes D1 à D4 sont passantes. Elle commande le commutateur SW3 pour qu'il soit ouvert, afin que les condensateurs SC1 et SC2 soient reliées tous les deux en parallèle sur les sorties du dispositif PD1, respectivement par les résistances R1 et R2. Les condensateurs SC1 et SC2 se chargent à la tension fournie par les sources B1 et B2, à travers les diodes D1, ..., D4, soit environ 47V.

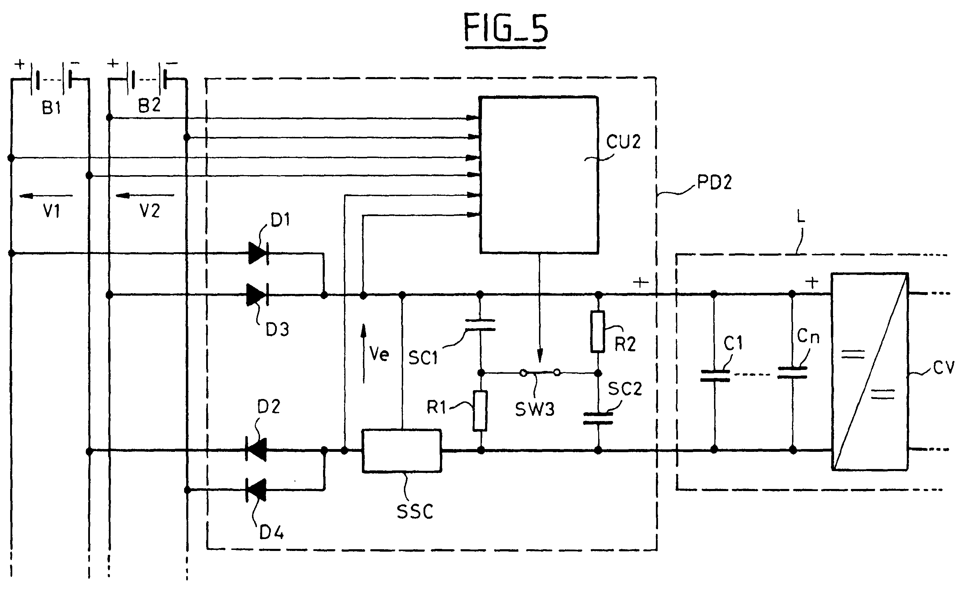

La **figure 5** représente le schéma synoptique de cet exemple de réalisation PD2, dans l'état où il est lorsque la source d'alimentation B1, B2 a une défaillance transitoire due à un court-ciruit sur une des charges autres que L. Dans le dispositif de protection PD2, les tensions V1 et V2 devenant subitement inférieures à la tension Ve, les diodes D1, D2, D3, D4 se bloquent et isolent le dispositif PD2 des sources B1 et B2 qui sont court-circuitées. Elles empêchent que le court-circuit décharge les condensateurs SC1 et SC2. La tension aux bornes des condensateurs SC1, SC2, C1, ..., Cn se met à baisser progressivement car ils se déchargent en alimentant le convertisseur CV.

Lorsque la tension Ve (environ 47V) devient supérieure à V1 la paire de diode D1-D2 se bloque. Lorsque la tension Ve devient supérieure à V2 la paire de diode D3-D4 se bloque. Lorsque Ve devient supérieure à V1 et à V2, l'unité de commande CU2 en conclut qu'il y a une défaillance des sources B1 et 82 ; et elle commande alors le commutateur SW3 pour qu'ils soit fermé. Les condensateurs SC1 et SC2 sont alors reliées en série. La résistance R1 se trouve en parallèle avec le condensateur SC2. La résistance R2 se trouve en parallèle avec le condensateur SC1. Les constantes de temps R2 x SC1 et R1 x SC2 sont choisies très supérieures à 5 ms pour que la décharge provoquée par ces résistances soit négligeable.

L'ensemble des deux condensateurs, SC1-SC2 reliés en série, est alors en parallèle sur les sorties du dispositif PD1, et fournit une tension égale à la somme de la tension de charge du condensateur C1 et de la tension de charge du condensateur C2, au moment de la commutation, soit environ 82V initialement.

Quand le court-circuit est terminé, l'unité de commande CU2 détecte que la tension Ve a une valeur (47V environ) redevenue supérieure à V1 et V2, pendant une durée supérieure à un seuil fixé (5ms par exemple). Elle commande le commutateur SW3 pour qu'il soit ouvert. Les condensateurs SC1 et SC2 sont de nouveau reliées tous les deux en parallèle sur les sorties du dispositif PD2. Ils se rechargent à la tension fournie par les sources B1 et B2, à travers les diodes D1, ..., D4, soit environ 47V.

L'unité de commande CU1' décrite en se référant à la figure 3 pourrait être utilisée aussi pour commander le commutateur SW3 de ce second exemple de réalisation, à la place de l'unité CU2.

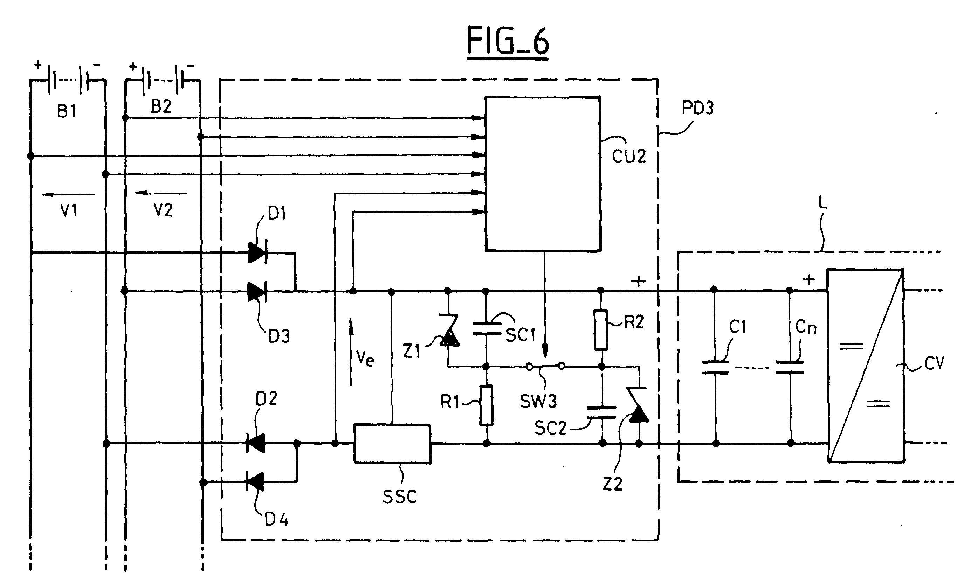

La **figure 6** représente le schéma synoptique d'une variante PD3 de cet exemple de réalisation, permettant d'utiliser des condensateur de stockage SC1 et SC2, conçus pour une tension de service moins élevée, ce qui permet de réduire notablement leur coût et leur encombrement. Dans ce but, une diode Zener Z1 est branchée en parallèle sur le condensateur C1 et une diode Zener Z2 est branchée en parallèle sur le condensateur C2. La diode Zener Z1 collabore avec la résistance R1 pour charger le condensateur C1 en limitant la tension de charge à 47 V. De même, la diode Zener Z2 collabore avec la résistance R2 pour charger le condensateur C2 en limitant la tension de charge à 47V.

Dans un exemple de réalisation, on utilise des résistances R1 = R2 = 10 Kilo-ohms et des condensateurs de stockage SC1 = SC2 = 220 microfarads, conçus pour une tension de service de 50 V au lieu de 80 V ou 100 V en l'absence des diodes Zener.

Pour toutes les variantes décrites ci-dessus, les capacités des condensateurs de stockage SC 1 et SC2 sont choisies en fonction de :

- de la durée de la défaillance à pallier ;
- de la tension minimale nécessaire au convertisseur CV ;
- de la tension maximale supportable par le convertisseur CV ;
- de la consommation maximale de la charge L ;
- et de la capacité des condensateurs de filtrage C1, ...Cn.

Par exemple, pour les variantes décrites ci-dessus, en référence aux figures 1 à 5, et pour :

- une durée de la défaillance égale à 5 ms,
- une tension minimale égale à 36V,
- une tension maximale supportable égale à 72 V ,
- une tension Vin de charge des condensateurs égale à 43 V au moment du déclenchement (lors de la détection de la panne des sources B1 et B2),
- une consommation maximale égale à 195 W,
- et une capacité totale des condensateurs de filtrage C1, ..., Cn égale à 220 microfarads,

on peut utiliser deux condensateurs SC1 et SC2 ayant chacun une capacité de 680 microfarads. La tension $V_{BOOST}$ réellement fournie par les deux condensateurs en série, juste après la connexion en série, est alors de 69 V.

De manière plus générale, si on appelle C la capacité de chacun des condensateurs SC1 et SC2, et si la capacité totale des condensateurs de filtrage C1, ... , Cn, est égale à n x C, on peut démontrer que la tension $V_{BOOST}$ réellement fournie par les deux condensateurs en série, juste après la connexion en série, est donnée par la formule :

$$V_{BOOST} = \frac{n+1}{n+1/2} V_{in}$$

où $V_{in}$ est la tension de charge des condensateurs au moment du déclenchement (lors de la détection de la panne des sources B1 et B2).

On peut démontrer aussi que la capacité totale $C_{tot}$, de SC1 en série avec SC2, et de C1, ..., Cn, nécessaire pour surmonter une défaillance de durée $\Delta t$ avec une charge L consommant une puissance P est égale à :

$$C_{tot} = \frac{2 \cdot P \cdot \Delta t}{V_{BOOST}^2 - V_{min}^2}$$

où $V_{min}$ est la tension minimale nécessaire au fonctionnement du convertisseur CV.

On en déduit la capacité C de chaque condensateur SC 1 et SC2 :

$$C = \frac{C_{tot}}{(n+1/2)}$$

On peut aussi calculer la durée maximale d'une défaillance supportable, par la formule :

$$\Delta t_{max} = C_{tot} \frac{(V^2{}_{boost} - V^2{}_{mni})}{2P}$$

La réalisation des commutateurs électroniques SW1, SW2, SW3 est à la portée de l'Homme de L'Art. Ils comportent classiquement des transistors MOS. Le dispositif de commutation des sources, constitué par les diodes D1, ..., D4, peut être réalisé aussi par des transistors MOS.

## Revendications

1. Dispositif de protection (PD2 ; PD3) permettant à une charge (L) de supporter une défaillance transitoire d'alimentation, ce dispositif comportant :

   - des entrées connectées à au moins une source d'alimentation électrique (B1, B2), et des sorties connectées à cette charge (L) ;
   - au moins deux condensateurs de stockage (SC1, SC2), des premiers moyens de commutation (D1, ..., D4, SW3) et des moyens (CU2) de commande des premiers moyens de commutation, tels que ces deux condensateurs de stockage sont :

   -- reliées en parallèle à au moins une source d'alimentation (B1, B2) quand au moins une source d'alimentation fonctionne normalement ;
   -- isolées de toute source d'alimentation (B1, B2) et sont reliées en série sur les sorties du dispositif (PD2) quand aucune source d'alimentation (B1, B2) ne fonctionne normalement ;

   **caractérisé en ce que** :

   - un premier condensateur de stockage (SC1) a une première borne reliée à une sortie positive du dispositif, et une seconde borne reliée à la sortie négative du dispositif par une première résistance (R1) ;
   - un second condensateur de stockage (SC2) a une première borne reliée à la sortie négative du dispositif, et une seconde borne reliée à la sortie positive du dispositif par une seconde résistance (R2) ;
   - un commutateur électronique (SW3) relie la seconde borne du premier condensateur (SC1) à la seconde borne du second condensateur de stockage (SC2) ;

   et **en ce que** les premiers moyens de commande (CU2) comportent des moyens pour commander le commutateurs (SW3) de façon que : lorsqu'aucune source d'alimentation ne fonctionne normalement, le commutateur (SW3) se ferme ; et que, lorsqu'au moins une source d'alimentation fonctionne normalement, le commutateur (SW3) s'ouvre.

2. Dispositif selon la revendication 1, **caractérisé en ce qu'**il comporte en outre deux diodes Zener (Z1, Z2) reliées respectivement en parallèle sur chacun des condensateurs de stockage (SC1, SC2) de manière à limiter leurs tensions de charge respectives à une valeur inférieure à la tension fournie par une source d'alimentation (B1, B2).

3. Dispositif selon la revendication 1, **caractérisé en ce qu'**il comporte en outre un circuit de démarrage lent (SSC) intercalé entre chaque source d'alimentation (B1, B2) et les condensateurs de stockage (SC1, SC2).

4. Dispositif selon la revendications 1, **caractérisé en ce qu'**il comporte en outre des seconds moyens de commutation (D1, D2, D3, D4) intercalés entre chaque source d'alimentation (B1, B2) et les condensateurs de stockage (SC1, SC2), ces seconds moyens de commutation étant agencés de façon à empêcher qu'un court-circuit sur une source d'alimentation (B1, B2) puisse décharger les condensateurs de stockage (SC 1, SC2).

## Claims

1. A protection circuit (PD2; PD3) enabling a load (L) to withstand a transient power supply failure, the circuit comprising:

   - inputs connected to at least one electrical power supply (B1, B2) and outputs connected to the load (L); and
   - at least two storage capacitors (SC1, SC2), first switching means (D1 to D4, SW3) and control means (CU2) for the first switching means such that the two storage capacitors are:

     - connected in parallel to at least one power supply (B1, B2) when at least one power supply is operating normally; and
     - isolated from any power supply (B1, B2) and connected in series to the outputs of the circuit (PD2) when no power supply (B1, B2) is operating normally;

   and the circuit being **characterized in that**:

     - a first storage capacitor (SC1) has a first terminal connected to a positive output of the circuit and a second terminal connected to the negative output of the circuit by a first resistor (R1);
     - a second storage capacitor (SC2) has a first terminal connected to the negative output of the circuit and a second terminal connected to the positive output of the circuit by a second resistor (R2); and
     - an electronic switch (SW3) connects the second terminal of the first capacitor (SC1) to the second terminal of the second storage capacitor (SC2); and

   **in that** the first control means (CU2) include control means for commanding the switches (SW3) such that the switch (SW3) closes when no power supply is operating normally and the switch (SW3) opens when at least one power supply is operating normally.

2. A circuit according to claim 1, **characterized in that** it further comprises two Zener diodes (Z1, Z2) shunting respective storage capacitors (SC1, SC2) to limit their respective charge voltages to a value less than the voltage of a power supply (B1, B2).

3. A circuit according to claim 1, **characterized in that** it further comprises a slow-start circuit (SSC) between each power supply (B1, B2) and the storage capacitors (SC1, SC2).

4. A circuit according to claim 1, **characterized in that** it further comprises second switching means (D1, D2, D3, D4) between each power supply (B1, B2) and the storage capacitors (SC1, SC2) adapted to prevent a short-circuit across a power supply (B1, B2) discharging the storage capacitors (SC1, SC2).

## Patentansprüche

1. Sicherungsvorrichtung (PD2; PD3), die es einer Ladung (L) ermöglicht, einem vorübergehenden Ausfall der Versorgungsspannung standzuhalten, wobei diese Vorrichtung folgendes einschließt:

   - Eingänge, die an mindestens eine Stromversorgungsquelle (B1, B2) angeschlossen sind, und Ausgänge, die an diese Ladung (L) angeschlossen sind;
   - mindestens zwei Speicherkondensatoren (SC1, SC2), erste Mittel zur Umschaltung (D1, .., D4, SW3) und Mittel (CU2) zur Steuerung der ersten Mittel zur Umschaltung, wie diese zwei Speicherkondensatoren sind:

     -- parallel an mindestens eine Stromversorgungsquelle (B1, B2) angeschlossen, wenn mindestens eine Stromversorgungsquelle normal funktioniert;
     -- von jeglicher Stromversorgungsquelle (B1, B2) isoliert und in Reihe an die Ausgänge der Vorrichtung (PD2) angeschlossen, wenn keine Stromversorgungsquelle (B1, B2) normal funktioniert;

   und **dadurch gekennzeichnet, dass**:

     - ein erster Speicherkondensator (SC1) eine erste Klemme hat, die mit einem positiven Ausgang der Vorrichtung verbunden ist, und eine zweite Klemme, die mit dem negativen Ausgang der Vorrichtung über einen ersten Widerstand (R1) verbunden ist;
     - ein zweiter Speicherkondensator (SC2) eine erste Klemme hat, die mit dem negativen Ausgang der Vorrichtung verbunden ist, und eine zweite Klemme, die mit dem positiven Ausgang der Vorrichtung über einen zweiten Widerstand (R2) verbunden ist;
     - ein elektronischer Schalter (SW3) die zweite Klemme des ersten Kondensators (SC1) mit der zweiten Klemme des zweiten Speicherkondensators (SC2) verbindet;

und **dadurch gekennzeichnet, dass** die ersten Mittel zur Steuerung (CU2) Mittel zum Steuern des Schalters (SW3) einschließen, dergestalt, dass wenn keine Stromversorgungsquelle normal funktioniert, der Schalter (SW3) geschlossen wird; und dass wenn mindestens eine Stromversorgungsquelle normal funktioniert, der Schalter (SW3) geöffnet wird.

2. Vorrichtung gemäß Anspruch 1, **dadurch gekennzeichnet, dass** sie außerdem zwei Zener-Dioden (Z1, Z2) einschließt, die jeweils parallel an jedem der Speicherkondensatoren (SC1, SC2) angeschlossen sind, um ihre jeweiligen Ladespannungen auf einen Wert zu begrenzen, der niedriger ist als die von einer Stromversorgungsquelle (B1, B2) gelieferte Spannung.

3. Vorrichtung gemäß Anspruch 1, **dadurch gekennzeichnet, dass** sie außerdem eine langsame Anlasserschaltung (SSC) einschließt, die zwischen jede Stromversorgungsquelle (B1, B2) und die Speicherkondensatoren (SSC1, SC2) zwischengeschaltet ist.

4. Vorrichtung gemäß Anspruch 1, **dadurch gekennzeichnet, dass** sie außerdem zweite Mittel zur Umschaltung (D1, D2, D3, D4) einschließt, die zwischen jede Stromversorgungsquelle (B1, B2) und die Speicherkondensatoren (SC1, SC2) zwischengeschaltet sind, wobei diese zweiten Mittel zur Umschaltung so aufgebaut sind, dass verhindert wird, dass ein Kurzschluss an einer Stromversorgungsquelle (B1, B2) die Speicherkondensatoren (SSC1, SC2) entladen kann.

FIG 1

FIG_2

FIG_3

# FIG_4

EP 1 701 531 B1

FIG_5

FIG_6

EP 1 701 531 B1

**EP 1 701 531 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5973547 A